# EUROPÄISCHE PATENTSCHRIFT

(11) **EP 1 085 795 B1**
(45) Veröffentlichungstag und Bekanntmachung des Hinweises auf die Patenterteilung: **06.05.2004**
(21) Anmeldenummer: 00120077.3
(22) Anmeldetag: 15.09.2000
(51) Int. Cl.: H05K 7/14, G06F 1/18, G06F 1/20, H05K 7/20

(54) **Gehäuse mit elektrischen und/oder elektronischen Einheiten**
Cabinet with electrical and/or electronic units
Receptacle avec des unités électriques et/ou électroniques

(30) Priorität: 17.09.1999 DE 19944550
(43) Veröffentlichungstag der Anmeldung: 21.03.2001
(73) Patentinhaber: IN Blechverarbeitungszentrum Sömmerda GmbH, 99610 Sömmerda (DE)
(72) Erfinder: Sternberg, Randolph, 55239 Gau Odernheim (DE); Welker, Klaus, 60437 Frankfurt (DE); Kohlmann, Kai, 99099 Erfurt (DE); Hergt, Susen, 99631 Weissensee (DE); Wellhöfer, Stefan, 99195 Schlossvippach (DE)
(74) Vertreter: Strobel, Wolfgang, Dipl.-Ing.

(56) Entgegenhaltungen:
- EP-A- 0 898 220
- WO-A-93/10654
- DE-A- 19 515 122
- US-A- 5 339 214
- US-B1- 6 234 240

## Beschreibung

Die Erfindung bezieht sich auf ein Gehäuse mit eingebauten wärmeabgebenden elektrischen und/oder elektronischen Einheiten, insbesondere Gehäuse für einen Computer mit Mainboard und Prozessor, Netzgerät, Laufwerk sowie Slotkarten.

Mit Fortschreiten der Computerentwicklung gelangen immer leistungsfähigere Prozessoren zum Einsatz, die auf Grund ihrer Leistung und hierdurch bedingt entstehender Restwärme einer erheblichen Kühlung bedürfen. Hierzu werden aktive Lüfter benutzt, die häufig zu einer unerwünschten Geräuschbildung führen.

Um einen hinreichenden Luftdurchsatz sicherzustellen, müssen Gehäuse entsprechender Computer relativ große Durchtrittsöffnungen aufweisen. Dies führt dazu, dass die erforderliche Abschirmung gegen elektromagnetische Strahlung, die sowohl in das Gehäuse eindringen bzw. von den elektronischen Bauelementen erzeugt und nach außen dringen kann, nicht gewährleistet ist. Auf Grund der benötigten hohen Luftströmung ist außerdem der Nachteil gegeben, dass durch die durch das Gehäuse geförderte Luft eine Verstaubung erfolgt, die insbesondere zu einer Verschmutzung von z. B. Leseköpfen von CD-Laufwerken oder Diskettenlaufwerken führen kann, wodurch deren Funktionstüchtigkeit beeinträchtigt wird.

Um wärmeerzeugende elektronische Einheiten kühlen zu können, wird nach der DE 195 15 122 C2 vorgeschlagen, elektronische Bauelemente mit Kühlkörpern zu versehen, die an den Außenseiten eines Gehäuses befestigt sind. Die Baugruppen selbst sind sodann gegenüber dem Gehäuseinneren thermisch isoliert. Zusätzlich ist jedoch ein Luftumwälzkreis mit Luftwärmetauscher und Umwälzventilator erforderlich.

Aus der DE 692 23 643 T2 (EP 0 613 611 B1) ist eine Kühleinrichtung für Computerteile bekannt, die mit einem Kühlkreislauf in Verbindung stehen, der Kondensator und Verdampfer sowie Ventilatoreinrichtungen umfasst, die Reaktoren zugeordnet sind, die den Kühlmittelkreis mit Metallsalzen bzw. Kühlmittel enthalten.

Die EP 0 898 220 A1, die den nächstkommenden Stand der Technik bildet, zeigt demgegenüber eine erste Verbesserung, indem Heat Pipes zum direkten Abtransport der von einem Prozessor erzeugten Wärme zu einem Kühlprofil vorgesehen sind. Das Kühlprofil ist in einer Ecke im Inneren des Computergehäuses angeordnet und weist eine Grundplatte sowie damit verbundene Kühlrippen auf. Die Gehäuseaußenwandung zeigt Luftdurchtrittsöffnungen im Bereich der Kühlrippen, so daß die im Bereich der Kühlrippen erwärmte Luft durch natürliche Konvektion abgeführt werden kann. Hierdurch soll es ermöglicht werden, daß die Orientierung des Computers keinen Einfluß auf die Wärmeabführung hat, d.h. daß der Computer auf drei verschiedene Weisen aufgestellt werden kann. Weiterhin ist ein Ventilator vorgesehen, der die wärmeerzeugenden Einheiten im Gehäuse zusätzlich kühlen soll.

Der vorliegenden Erfindung liegt das Problem zu Grunde, ein Gehäuse der eingangs genannten Art so weiterzubilden, dass elektrische/elektronische Baueinheiten wie Prozessoren, die eine hohe Restwärme abgeben, eine hinreichende, für die Funktionsfähigkeit erforderliche Kühlung erfahren, ohne dass hierzu eine aktive Kühlung erforderlich ist.

Erfindungsgemäß wird das Problem im Wesentlichen dadurch gelöst, dass zumindest eine wärmeabgebende Einheit über eine Heat Pipe mit einem Kühlkörper verbunden ist, der an einer Gehäuseaußenwandung angeordnet ist und beidseitig offene Rohr- oder Halbrohrelemente aufweist. Bei der wärmeabgebenden Einheit handelt es sich vorzugsweise um einen Prozessor, wobei die Heat Pipe mit einem passiven Kühlkörper des Prozessors selbst verbunden ist.

Heat Pipes sind Wärmerohre, über die ein Wärmetransport zur automatischen Kühlung erfolgt. Schon bei geringen Temperaturunterschieden zwischen den Enden der in sich geschlossenen Wärmerohre werden relativ große Wärmemengen geleitet. Insbesondere handelt es sich bei den Heat Pipes um teilevakuierte Metallrohre, deren Innenwandungen mit einer porösen Schicht mit Kapillarstruktur ausgekleidet sind. Diese Schicht ist mit einer niedrig siedenden Flüssigkeit getränkt. Am wärmeren Rohrende, also im vorliegenden Fall im Kontaktbereich mit der wärmeabgebenden Einheit, verdampft die Flüssigkeit und nimmt dabei Verdampfungswärme auf, wodurch die Restwärme abgeleitet wird. Am kühleren Ende, also im Bereich der Außenwandung bzw. deren Abschnitt, kondensiert der Flüssigkeitsdampf und gibt die Verdampfungswärme ab. Durch die Kapillarwirkung der Oberfläche fließt das Kondensat wieder zum wärmeren Rohrende zurück. Schon bei einer Temperaturdifferenz von 3 bis 5 °C können mehrere kW Wärmeleistung übertragen werden.

Erfindungsgemäß nutzt man hinlänglich bekannte Heat Pipes, um Restwärme im erforderlichen Umfang abzuleiten, ohne dass es zusätzlich einer aktiven Belüftung bedarf. Hierdurch ergibt sich der Vorteil, dass das Gehäuse weitgehend geschlossen sein kann, so dass die erforderliche elektromagnetische Abschirmung gewährleistet ist. Auch erfolgt keine Zwangsluftführung durch das Gehäuse selbst, so dass Verschmutzungen bzw. Staubablagerungen an z. B. Leseköpfen unterbleiben. Ferner ist durch das Vermeiden eines aktiven Lüfters sichergestellt, dass eine ungewünschte Geräuschbildung unterbleibt.

Insbesondere sieht die Erfindung vor, dass die mit der Heat Pipe in wärmeleitendem Kontakt stehende Außenwandung bzw. deren Abschnitt aus Aluminium, insbesondere Aluminiumdruckguss und/oder Magnesium besteht oder diese enthält.

Insbesondere gehen die Rohr- oder Halbrohrelemente, die allgemein als Rohrbündel zu bezeichnen sind, von einer geschlossenen gehäuseinnenseitig verlaufenden Platte aus, die ihrerseits unmittelbar mit der Heat Pipe verbunden ist.

Nach einer Weiterbildung kann die mit der Heat Pipe verbundene Außenwandung Frontfläche des Gehäuses sein. Hierdurch ist sichergestellt, dass die passiven Kühlelemente , die einen Kamineffekt zum Durchströmen der an dem Gehäuse vorbeistreichenden Luft bewirken, ein getrennt hergestellter Abschnitt der Außenwandung sind, der aus einem anderen Material, insbesondere aus Aluminium wie Aluminiumdruckguss und/oder Magnesium, als die Außenwandung selbst besteht. Dabei ist der Abschnitt mit der Außenwandung lösbar wie z. B. durch Schrauben verbunden.

Vorteilhafterweise ist vorgesehen, dass in dem Gehäuse ein Netzgerät angeordnet ist, dessen wärmeerzeugenden Komponenten mit einer wärmeleitenden Platte, z.B. eines Aluminiumplatte verbunden sind, die ihrerseits mit einem passiven Kühlkörper in wärmeleitender Verbindung steht, die ein Abschnitt einer Gehäusewandung ist oder mit einer solchen verbunden ist.

Insbesondere ist jedoch vorgesehen, dass die Platte, die mit den wärmeerzeugenden Komponenten des Netzgerätes verbunden ist, eine Wandung oder ein Wandabschnitt vom Netzgerätgehäuse ist, die ihrerseits flächig mit einer Außenwandung des Computergehäuses verbunden ist, die in diesem Bereich außenseitig passive Kühlkörper aufweist.

Aufgrund der erfindungsgemäßen Lehre wird die Wärme des Netzgerätes gezielt zu einer Wandung hingeführt, von der die Wärme selbst nach außen über passive Kühlkörper an die Umgebung abgegeben wird.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden. bevorzugten Ausführungsbeispielen.

Es zeigen:
- Fig. 1: eine Frontansicht eines PC-Gehäuses,
- Fig. 2: einen Ausschnitt des PC-Gehäuses gemäß Fig. 1,
- Fig. 3: eine Prinzipdarstellung eines Mainboards mit einer zu einer Gehäusewandung führenden Heat Pipe,
- Fig. 4: eine vergrößerte Darstellung einer von einem Prozessor des Mainboards gemäß Fig. 3 zu einem Gehäuseabschnitt führenden Heat Pipe,
- Fig. 5 und 6: weitere Ausführungen von PC-Gehäusen,
- Fig. 7: eine Frontansicht eines Netzteiles,
- Fig. 8: eine Frontansicht eines Desktop-Gehäuses,
- Fig. 9: eine Frontansicht eines Tower-Gehäuses,
- Fig. 10: eine Rückansicht des Tower-Gehäuses gemäß Fig. 9,

Nachstehend wird die erfindungsgemäße Lehre, mit der eine Kühlung einer wärmeabgebenden elektrischen/elektronischen Einheit ohne aktive Kühlung erfolgt, an Hand eines Computergehäuses erläutert, ohne dass hierdurch die erfindungsgemäße Lehre eingeschränkt wird. Vielmehr ist diese für alle in einem Gehäuse angeordneten wärmeabgebenden elektrischen und elektronischen Einheiten anwendbar, bei denen eine aktive Kühlung durch einen Lüfter vermieden werden soll.

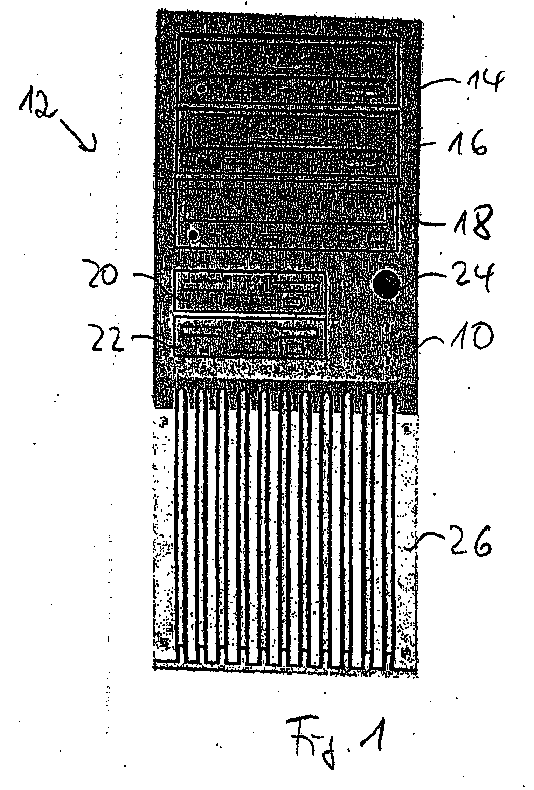

In Fig. 1 ist rein prinzipiell eine Frontwandung 10 eines Computergehäuses 12 dargestellt, das als Tower ausgebildet ist. In der Frontplatte 10 sind in bekannter Weise CD- bzw. DVD-Laufwerke 14, 16, 18 sowie Diskettenlaufwerke 20, 22 eingebaut. Auch befindet sich in der Frontfläche ein Ein- und Ausschalter 24 sowie nicht näher bezeichnete Leuchtdioden, um den Betriebszustand des PCs anzuzeigen.

Unterhalb dieser Funktionseinheiten weist die Frontwandung 10 einen nicht näher dargestellten Ausschnitt auf, der von einem plattenförmigen Element 26 verschlossen ist, der vorzugsweise aus einem Material besteht, das von dem der sonstigen Gehäusewandungen abweicht. So kann das Element 26 aus insbesondere Aluminium oder Aluminiumdruckguss oder Magnesium oder Kombinationen dieser bestehen, ohne dass hierdurch eine Einschränkung erfolgt. Wesentlich für das Material des Plattenelements bzw. der Abdeckung 26 ist es, dass dieses eine hohe Wärmeleitfähigkeit besitzt.

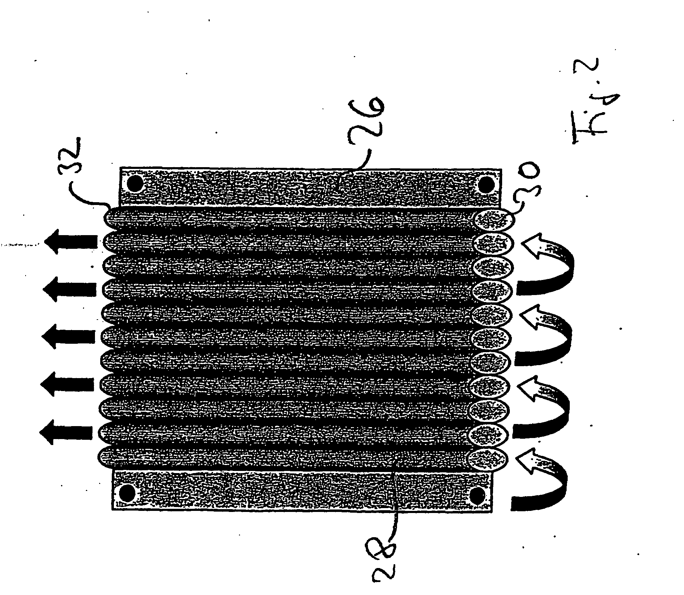

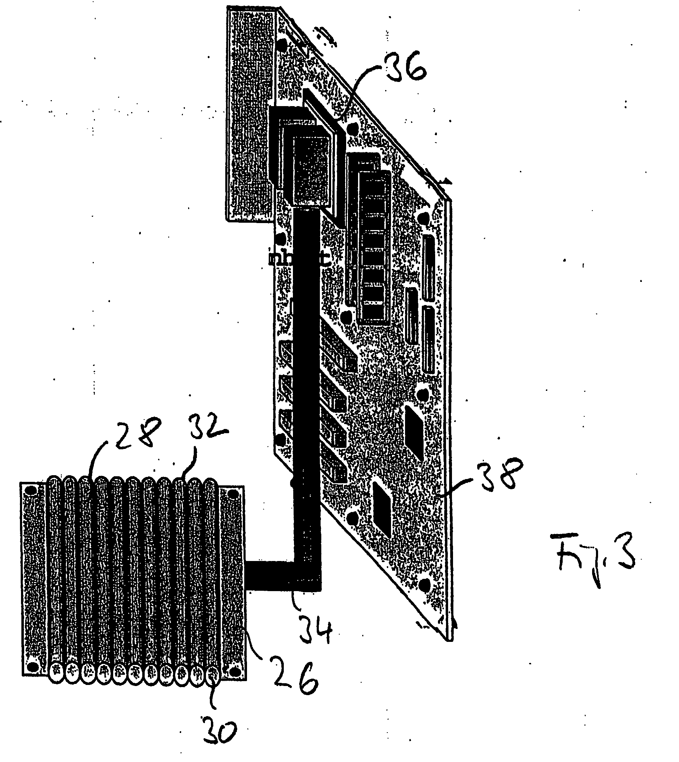

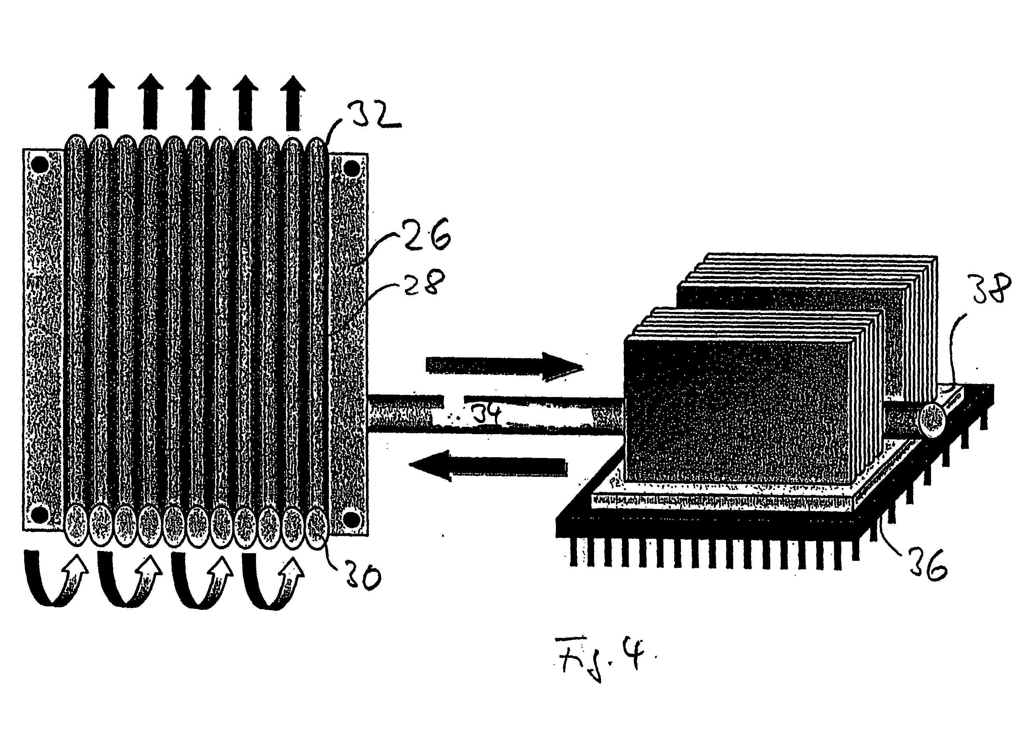

Wie insbesondere der Fig. 2 zu entnehmen ist, stehen über das Plattenelement 26 aneinandergereihte endseitig offene Rohrelemente 28 vor, über die eine Luftströmung von der jeweiligen Bodenöffnung 30 hin zur oberen Öffnung 32 erfolgt. Dabei wird der durch die in einer Reihe nebeneinander angeordneten Rohre 28 hervorgerufene Kamineffekt dadurch verstärkt, dass das Plattenelement 26 von der Gehäuseinnenseite her mit einer Heat Pipe 34 verbunden ist, über die Restwärme von einem Prozessor 36 abgeführt wird, der in bekannter Weise auf einem Mainboard 38 in dem Computergehäuse 12 angeordnet ist. Dabei ist die Heat Pipe 34 mit passiven Kühlelementen 38 und 30 des Prozessors 36 verbunden, wie durch die Fig. 4 verdeutlicht wird.

Die Heat Pipe 34 hat - in hinlänglich bekannter Weise - die Aufgabe, Wärme abzuführen, und zwar erfindungsgemäß von dem Prozessor 36 bzw. dem Kühlelement 38 zu dem Plattenelement 26 hin. Dies wird durch die Funktion der Heat Pipe sichergestellt, die ein teilevakuiertes Metallrohr umfasst, deren Innenwandung mit einer porösen Schicht mit Kapillarstruktur ausgekleidet ist. Diese Schicht ist mit einer niedrig siedenden Flüssigkeit getränkt. Am wärmeren Rohrende, also auf dem passiven Kühlkörper 38, verdampft die Flüssigkeit und nimmt dabei Restwärme auf. Am kühleren Ende, also an der gehäuseinnenseitigen Verbindung zwischen der Heat Pipe 34 und dem Plattenelement 36, wird der Flüssigkeitsdampf kondensiert, so dass das so entstandende Kondensat wieder zum wärmeren Rohrende, also zu dem Kühlkörper 38 zurückströmen kann.

Dadurch, dass Wärme von der Heat Pipe 34 an das Plattenelement 26 im Bereich der Rohrelemente 28 abgegeben wird, erfolgt eine Erwärmung des Plattenelementes 26, wodurch der durch die Rohre 28 bewirkte Kamineffekt verstärkt wird, und zwar auf Grund der Temperatur- und Höhendifferenz zwischen Zu- und Abluft, also zwischen Bodenöffnung 30 und Kopföffnung 32.

Insbesondere ist das Plattenelement 26 gehäuseinnenseitig eben ausgebildet, um eine große Kontaktfläche zur Heat Pipe 34 zur Verfügung zu stellen. Selbstverständlich können die aneinandergereihten Rohre 28 eine das Gehäuseinnere verschließende geschlossene Fläche bilden, mit der die Heat Pipe 34 verbunden ist.

Anstelle von den in der Zeichnung dargestellten Rohren 28 können auch Halbrohre vorgesehen sein, die den erforderlichen Wärmeübergang zwischen Gehäuseäußerem und Heat Pipe sicherstellen, um also die erforderliche Kondensatbildung in der Heat Pipe 34 zu ermöglichen.

Dadurch, dass die von dem Prozessor 36 erzeugte Wärme ohne aktive Lüftung nach außen abgeführt werden kann, sind die ansonsten erforderlichen Öffnungen wie Löcher in dem PC-Gehäuse 12 nicht oder nicht in dem Umfang erforderlich, so dass in Folge dessen die elektromagnetische Abschirmung sichergestellt ist. Ferner wird keine Luft durch das Gehäuse 12 aktiv zwangsgeführt, da ein Lüfter nicht vorhanden ist. Hierdurch bedingt können sich an den Leseköpfen der CD- bzw. DVD- bzw. Diskettenlaufwerken 14, 16, 18, 20, 22 Verschmutzungen nicht ablagern, so dass eine dauernde Funktionstüchtigkeit gegeben ist. Durch das Nichtvorhandensein von aktiven Lüftern entsteht zudem keine akustische Belästigung.

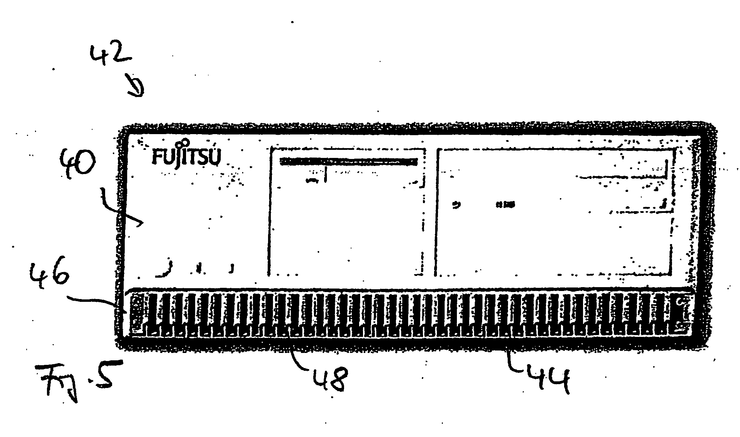

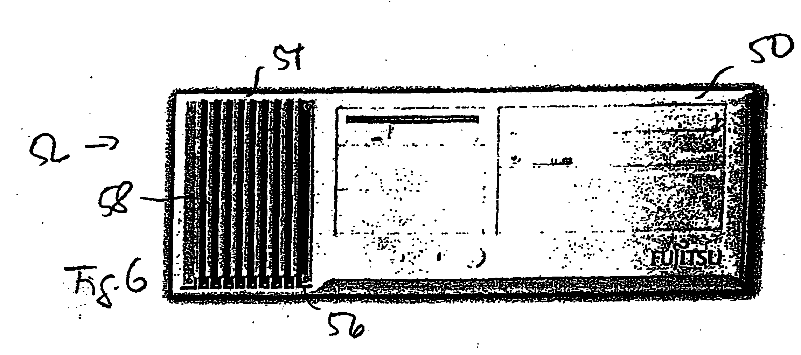

Ist der mit der Heat Pipe 34 verbundene Gehäuseabschnitt 26 vorzugsweise frontflächenseitig vorhanden, so kann auch jede andere Wandung bzw. ein Abschnitt einer solchen entsprechend ausgebildet sein. Auch ist eine Beschränkung der erfindungsgemäßen Neuerung nicht auf PC-Gehäuse 12 in Form eines Towers beschränkt. Vielmehr können auch Frontflächen von Desktops entsprechend ausgebildet werden, wie die Fig. 5 und 6 verdeutlichen.

So weist eine Frontwandung 40 eines Desktops 42 entlang seiner Bodenfläche 44 einen Gehäuseabschnitt 46 auf, der als einsetzbares Plattenelement ausgebildet ist und aneinandergereihte Rohrelemente 48 aufweist, um den Abschnitt 46 im erforderlichen Umfang zu kühlen, der mit einer nicht dargestellten Heat Pipe verbunden ist.

In Fig. 5 weist die Frontwandung 50 eines Desktops 52 in einem Seitenbereich 54 ein den Fig. 1 bis 4 entsprechendes einen Ausschnitt der Frontwandung 50 abdeckendes Plattenelement 56 auf, welches die eine Kaminwirkung hervorrufenden Kühlrohre 58 umfasst.

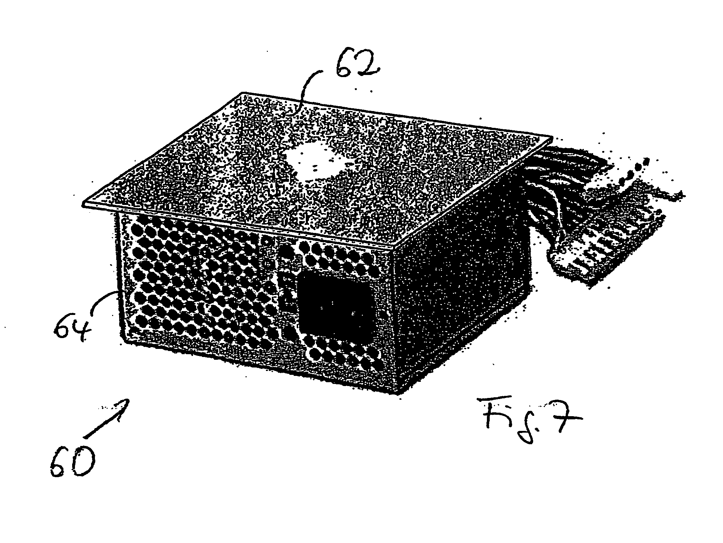

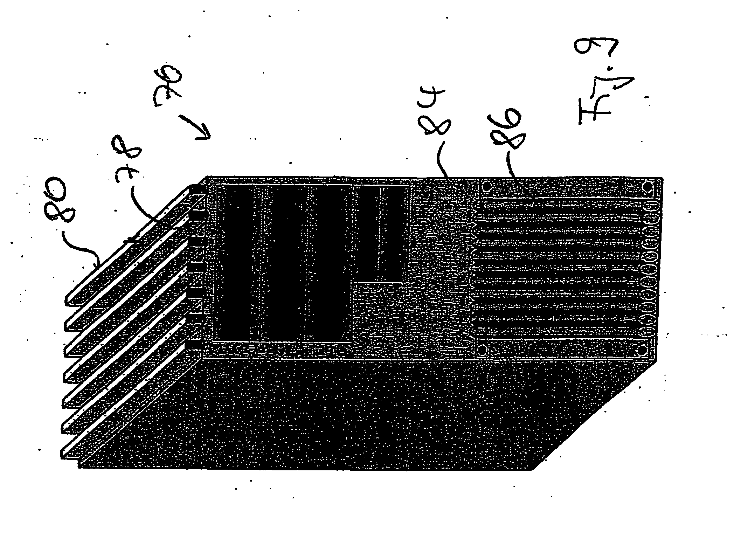

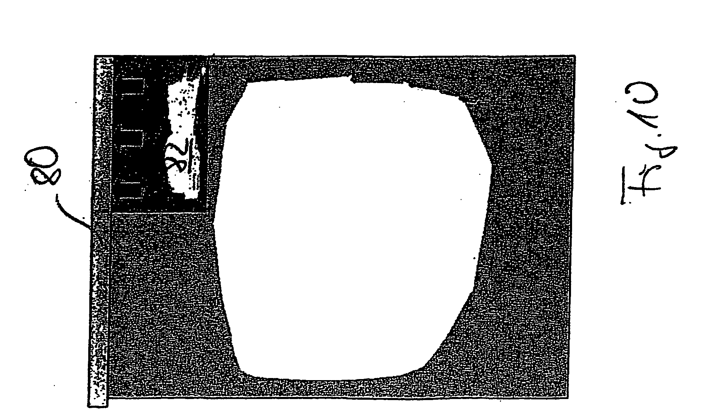

Den Fig. 7 bis 12 sind weitere hervorzuhebende Vorschläge zu entnehmen, um von den in einem Gehäuse wie Computergehäuse angeordneten Elementen und Bausteinen erzeugte Wärme ohne aktive Kühlung abzuleiten und ohne dass es unerwünscht großer Öffnungen in dem Gehäuse selbst bedarf.

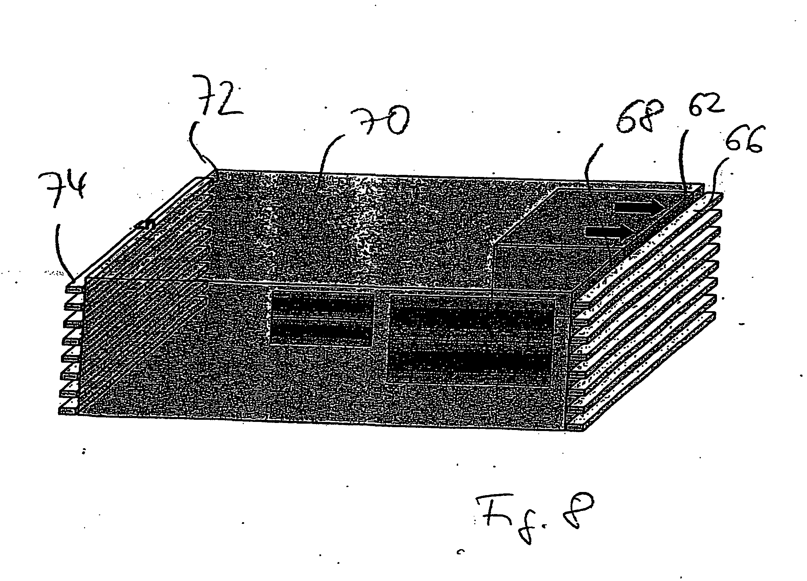

Eine wesentliche Wärmequelle stellt üblicherweise ein Netzteil dar. Erfindungsgemäß wird daher ein Netzteil 60 vorgeschlagen, bei dem wärmeerzeugende Komponenten mit einer Platte 62 verbunden sind. Dabei kann die Platte 62, die zum Beispiel aus Aluminium besteht, eine Wandung des Netzteilgehäuses 64 bilden. Das Netzteil 60 wird sodann mit der Platte 62 mit einem passiven Kühlkörper 66 wie Kühlrippen verbunden, der sich entlang einer Außenwandung 68 eines PC-Gehäuses 70 erstreckt. Dabei kann die Platte 62 mit dem Kühlkörper 66 verschraubt werden, um eine gewünschte flächige bzw. innige Verbindung und damit einen guten Wärmeübergang zu gewährleisten. Eine entsprechende Anordnung ist in Fig. 8 rein prinzipiell wiedergegeben, wobei das Gehäuse 70 ein Desktop-Gehäuse ist. Hierdurch erfolgt jedoch eine Beschränkung der erfindungsgemäßen Lehre nicht, wie anhand der Fig. 9, 10 und 12 verdeutlicht wird.

Mit anderen Worten wird gezielt die Verlustwärme des Netzteils im Bereich einer Wandung von dessen Gehäuse erzeugt, über die die Wärme sodann nach außen abgeleitet wird. Dies wird durch die Fig. 13 verdeutlicht.

Anzumerken ist noch, dass das erfindungsgemäß ohne aktive Kühlung ausgebildete Netzteil oder -gerät 16 Abmessungen aufweist, die ATX oder µATX Formfaktor entsprechen.

Ist in Fig. 8 die mit den wärmeerzeugenden Elementen des Netzteils 16 verbundene Platte 62 an der Seitenwandung 68 mit dem passiven Kühlkörper wie Kühlrippen verbunden, so kann selbstverständlich auch eine andere Gehäusewandung entsprechend ausgebildet werden. Die der Wandung 68 gegenüberliegende Seitenwandung 72 des Desktop-Gehäuses 70 weist ebenfalls einen passiven Kühlkörper in Form von Kühlrippen 74 auf, die optional zur Kühlung von zum Beispiel Festplatten oder anderen elektronischen Komponenten verwendet werden können.

In den Fig. 9 und 10 ist ein Tower-Gehäuse 76 dargestellt, dessen Kopfwandung 78 einen passiven Kühlkörper in Form von Kühlrippen 80 umfasst, die mit einem Netzteil 82, d. h. dessen in Fig. 7 mit den Bezugszeichen 62 versehene Platte verbunden wie verschraubt sind, um das Netzteil 62 ohne aktiven Lüfter kühlen zu können. Des Weiteren ist die Frontwandung 84 des Tower-Gehäuses 76 in seinem unteren Bereich mit Rohrelementen 86 versehen, die entweder die im Zusammenhang mit den Fig. 1 bis 6 zu lösende Aufgabe zur Kühlung bzw. zur Ableitung von Wärme erfüllen oder gegebenenfalls allein aus optischen Gründen vorgesehen sind. Letzteres ist dann der Fall, wenn die ansonsten vorhandenen passiven Kühlkörper 80 zur Ableitung von in dem Gehäuse 78 entstehender Wärme ausreichen.

## Patentansprüche

1. Gehäuse (12) mit eingebauten elektrischen und/oder elektronischen Einheiten (36), insbesondere Gehäuse für einen Computer mit Mainboard (38), Prozessor (36), Netzgerät (60), Laufwerk (14, 16, 18, 20, 22) und Slotkarten, wobei zumindest eine wärmeabgebende Einheit (36, 38, 60) über eine Heat Pipe (34) mit einem Kühlkörper (28, 74, 88) verbunden ist,
**dadurch gekennzeichnet, daß**
der Kühlkörper (28, 74, 88) an einer Gehäuseaußenwandung (10, 40, 50) bzw. an einem Abschnitt (26, 46, 56) derselben angeordnet ist und aneinandergereihte beidseitig offene Rohr- oder Halbrohrelemente (28, 48, 58) aufweist.

2. Gehäuse nach Anspruch 1, **dadurch gekennzeichnet, daß** die Heat Pipe (34) mit dem Prozessor (36) als die wärmeabgebende Einheit bzw. mit einem passiven Kühlkörper (38) des Prozessors verbunden ist.

3. Gehäuse nach einem der vorhergehenden Ansprüche, **dadurch gekennzeichnet, daß** die mit der Heat Pipe in wärmeleitendem Kontakt stehende Außenwandung (10, 40, 50) bzw. deren Abschnitt (26, 46, 56) aus Aluminium, insbesondere Aluminiumdruckguß und/oder Magnesium besteht oder dieses enthält.

4. Gehäuse nach einem der vorhergehenden Ansprüche, **dadurch gekennzeichnet, daß** die Rohr- oder Halbrohrelemente (28, 48, 58) von einer gehäuseinnenseitig geschlossenen Platte ausgehen, die in wärmeleitendem Kontakt mit der Heat Pipe (34) verbunden ist.

5. Gehäuse nach einem der vorhergehenden Ansprüche, **dadurch gekennzeichnet, daß** die mit der Heat Pipe (34) verbundene Außenwandung (10, 40, 50) bzw. deren Abschnitt (26, 46, 56) die Frontfläche oder Teil der Frontfläche des Gehäuses (10) bildet.

6. Gehäuse nach einem der vorhergehenden Ansprüche, **dadurch gekennzeichnet, daß** der mit der Heat Pipe (34) verbundene Abschnitt (26, 46, 56) aus einem anderen Material als die den Abschnitt aufweisende Außenwandung (10, 40, 50) besteht, wobei insbesondere der Abschnitt lösbar mit der Außenwandung (10, 40, 50) verbunden ist.

7. Gehäuse nach einem der vorhergehenden Ansprüche, **dadurch gekennzeichnet, daß** wärmeerzeugende Komponenten des Netzgerätes (60) mit einer wärmeleitenden Platte (62) verbunden sind, die ihrerseits mit einer Gehäusewandung in wärmeleitender Verbindung steht.

8. Gehäuse nach Anspruch 7, **dadurch gekennzeichnet, daß** die mit dem wärmeerzeugenden Komponenten des Netzgerätes (60) verbundene Platte (62) eine Wandung vom Netzgerätgehäuse (64) ist.

## Claims

1. Cabinet (12) with built-in electrical and/or electronic units (36), in particular cabinet for a computer with a main board (38), processor (36), power supply unit (60), drive (14, 16, 18, 20, 22) and slot cards, at least one heat-dissipating unit (36, 38, 60) being connected to a heat sink (28, 74, 88) by means of a heat pipe (34),
**characterized in that**
the heat sink (28, 74, 88) is arranged on an outer cabinet wall (10, 40, 50) or on a portion (26, 46, 56) of the same and has pipe or half-pipe elements (28, 48, 58) that are arranged in series with one another and are open at both ends.

2. Cabinet according to Claim 1, **characterized in that** the heat pipe (34) is connected to the processor (36) as the heat-dissipating unit or to a passive heat sink (38) of the processor.

3. Cabinet according to one of the preceding claims, **characterized in that** the outer wall (10, 40, 50) or the portion (26, 46, 56) thereof that is in heat-conducting contact with the heat pipe consists of aluminium, in particular die-cast aluminium, and/or magnesium, or contains the latter.

4. Cabinet according to one of the preceding claims, **characterized in that** the pipe or half-pipe elements (28, 48, 58) extend from a plate which is closed on the inside of the cabinet and is connected in heat-conducting contact to the heat pipe (34).

5. Cabinet according to one of the preceding claims, **characterized in that** the outer wall (10, 40, 50) or the portion (26, 46, 56) thereof that is connected to the heat pipe (34) forms the front face or part of the front face of the cabinet (10).

6. Cabinet according to one of the preceding claims, **characterized in that** the portion (26, 46, 56) that is connected to the heat pipe (34) consists of a different material than the outer wall (10, 40, 50) having the portion, the portion being in particular releasably connected to the outer wall (10, 40, 50).

7. Cabinet according to one of the preceding claims, **characterized in that** heat-generating components of the power supply unit (60) are connected to a heat-conducting plate (62), which for its part is in heat-conducting connection with a cabinet wall.

8. Cabinet according to Claim 7, **characterized in that** the plate (62) that is connected to the heat-generating components of the power supply unit (60) is a wall of the power supply unit housing (64).

## Revendications

1. Boîtier (12) comprenant des unités électriques et/ou électroniques (36) incorporées, en particulier boîtier pour un ordinateur avec carte mère (38), processeur (36), bloc d'alimentation (60), lecteur (14, 16, 18, 20, 22) et cartes d'extension, au moins une unité exothermique (36, 38, 60) étant reliée par l'intermédiaire d'un caloduc (34) à un dissipateur thermique (28, 74, 88), **caractérisé en ce que** le dissipateur thermique (28, 74, 88) est disposé sur une paroi extérieure du boîtier (10, 40, 50) ou sur une section (26, 46, 56) de cette dernière et présente des éléments tubulaires ou semi-tubulaires (28, 48, 58) juxtaposés ouverts des deux côtés.

2. Boîtier suivant la revendication 1, **caractérisé en ce que** le caloduc (34) est relié au processeur (36) en tant qu'unité exothermique ou à un dissipateur thermique passif (38) du processeur.

3. Boîtier suivant l'une des revendications précédentes, **caractérisé en ce que** la paroi extérieure (10, 40, 50) ou sa section (26, 46, 56) en contact thermoconducteur avec le caloduc se compose d'aluminium, en particulier d'aluminium coulé sous pression et/ou de magnésium, ou contient ce dernier.

4. Boîtier suivant l'une des revendications précédentes, **caractérisé en ce que** les éléments tubulaires ou semi-tubulaires (28, 48, 58) partent d'une plaque fermée côté intérieur du boîtier, qui est reliée en contact thermoconducteur au caloduc (34).

5. Boîtier suivant l'une des revendications précédentes, **caractérisé en ce que** la paroi extérieure (10, 40, 50) ou sa section (26, 46, 56) reliée au caloduc (34) forme la surface frontale ou une partie de la surface frontale du boîtier (10).

6. Boîtier suivant l'une des revendications précédentes, **caractérisé en ce que** la section (26, 46, 56) reliée au caloduc (34) se compose d'un autre matériau que la paroi extérieure (10, 40, 50) présentant la section, la section étant en particulier assemblée de façon amovible avec la paroi extérieure (10, 40, 50).

7. Boîtier suivant l'une des revendications précédentes, **caractérisé en ce que** des composants générateurs de chaleur du bloc d'alimentation (60) sont reliés à une plaque thermoconductrice (62), qui est pour sa part en liaison thermoconductrice avec une paroi du boîtier.

8. Boîtier suivant la revendication 7, **caractérisé en ce que** la plaque (62) reliée aux composants générateurs de chaleur du bloc d'alimentation (60) est une paroi du boîtier (64) du bloc d'alimentation.
